# EUROPEAN PATENT APPLICATION

(11) **EP 1 519 572 A2**
(43) Date of publication of application: **30.03.2005**
(21) Application number: 04022107.9
(22) Date of filing: 16.09.2004
(51) Int. Cl.: H04N 5/44

(54) **Television receiver**

(30) Priority: 19.09.2003 JP 2003328575
(71) Applicant: Orion Electric Company, Ltd., Takefu-shi, Fukui-ken (JP)
(72) Inventor: Tsubokawa, Yukio, c/o Orion Electric Company Ltd., Takefu-shi Fukui-ken (JP); Mizushima, Yoshinori, c/o Orion Elect. Company Ltd, Takefu-shi Fukui-ken (JP)
(74) Representative: Kirschner, Klaus Dieter, Dipl.-Phys.

(57) **Abstract**

This invention provides a television receiver capable of receiving a desired channel by a simple operation when a channel number key is operated to select a to-be-received channel of a one-digit channel number. The television receiver includes a remote controller that includes channel number keys for selecting a to-be-received channel, a television monitor that outputs a broadcast content of the received channel, and a control micro computer. The television receiver is constituted so that channels, broadcasts on which are received, are sequentially stored, and the channel having the largest number of times of receiving and the last channel received just before the television receiver is turned off are stored. The television receiver determines whether one of or both of a first condition that the channel having the largest number of times of receiving is a one-digit channel and a second condition that the last channel is a one-digit channel are satisfied. If a user operates one of the channel number keys and a one-digit channel is input, in the case that one of or both of the first and second conditions are satisfied, then the television receiver promptly confirms that the one-digit channel corresponding to the operated number key is received, and outputs the broadcast content of the confirmed channel to the television monitor.

## Description

The present invention relates to a television receiver capable of facilitating operation when a channel number key is operated to receive a one-digit channel.

A television receiver can receive a broadcast content transmitted from a broadcasting station corresponding to each broadcast channel, and enables a user to view and listen to the broadcast content on the channel on a television monitor. To select a broadcast channel to be received by the television receiver, one or plural channel number keys provided on an operation remote controller are operated.

Namely, by performing an operation of sequentially depressing certain channel number keys and inputting channel numbers, a channel corresponding to the input numbers can be selected.

As a conventional technique, there is known a television receiver which confirms a channel number and selects a to-be-received channel corresponding to the confirmed channel number when a channel number key representing the channel number is depressed for a predetermined time or more (see, for example, Japanese Patent Application Laid-Open No. 10-289046).

The conventional television receiver has, however, the following disadvantage. If the conventional television receiver is to receive a channel having a one-digit channel number, it is often laborious to perform a channel number key operation for selecting the channel. Namely, in order to confirm that the user selects the one-digit channel, the user disadvantageously needs to continue to depress the channel number key corresponding to the selected channel for a certain time or more.

It is, therefore, an object of the present invention to provide a television receiver capable of selecting a one-digit channel by a simple operation when the channel is to be received.

According to one aspect of the present invention, there is provided a television receiver which comprises a plurality of channel number keys, a control microcomputer, and a television monitor, which receives a broadcast on a channel by an operation, by a user who uses the television receiver, of one of the channel number keys corresponding to the channel, and which outputs a content of the received broadcast to the television monitor, wherein by sequentially storing a plurality of channels broadcasts of which are received, the channel having a largest number of times of receiving and the last channel received just before the television receiver is turned off are stored, a first condition is set such that the channel having the largest number of times of receiving is a one-digit channel, a second condition is set such that the last channel is a one-digit channel, and it is determined whether the first condition is satisfied and whether the second condition is satisfied, and if the user operates one of one-digit channel number keys, and in the case that it is determined that one of or both of the first condition and the second condition are satisfied, it is confirmed that the one-digit channel corresponding to the operated one-digit channel number key is received, and the content of the broadcast on the confirmed channel is output to the television monitor.

According to the television receiver of the present invention, if the user operates one of the one-digit channel number keys, and both of or one of the first and the second conditions are satisfied, the television receiver confirms reception of the one-digit channel corresponding to the operated one-digit channel number key.

Therefore, if the one-digit channel is to be received, such a laborious operation as depression of the selected number key for the certain time or more so as to confirm reception of this channel is unnecessary.

Further, the television receiver can be constituted so that when the channels, the broadcasts on which are received, are stored, data on time zones in which the contents of the broadcasts on the respective channels are received are also stored, and the channel having the largest number of receiving is stored according to each of the time zones, and so that if the user operates one of one-digit channel number keys, it is determined whether the first condition is satisfied for a time zone in which the user operates the one of one-digit channel number keys.

According to the television receiver of the present invention, when the received channels are stored, the channels can be stored while making the channels correspond to the time zones in which the respective channels are received. Therefore, when it is confirmed that a one-digit cannel is received according to the operation of one of one-digit channel number keys, a confirmation processing according to each time zone in which the user uses the television receiver can be performed.

Further, the television receiver can be constituted so that when the channels, the broadcasts on which are received, are stored, data on receiving dates each composed by a month and a day at which the broadcast on each of the channels is received is also stored, and the channel having the largest number of receiving is stored according to each of the receiving dates, and so that if the user operates one of one-digit channel number keys, it is determined whether the first condition is satisfied for a date at which the user operates the one of one-digit channel number keys.

According to the television receiver of the present invention, when the received channels are stored, the channels can be stored while making the channels correspond to the dates at which the respective channels are received. Therefore, when it is confirmed that a one-digit cannel is received according to the operation of one of channel number keys, a confirmation processing according to each date at which the user uses the television receiver can be performed.

The present invention is carried out in the above-stated modes and exhibits advantages described below. The television receiver of the present invention enables the user who uses the television receiver to select a channel by a simple operation when a channel having a one-digit channel number is wished to be received.
Fig. 1 is a block diagram of a television receiver according to one embodiment of the present invention;
Figs. 2A and 2B depict examples of recording of counting the numbers of times of viewing for every channel;
Fig. 3 depicts a relationship among flags set based on data on a received channel, an operated channel number key, and a channel to be confirmed the reception;
Figs. 4A to 4C depict examples of an operation menu for setting conditions for counting the number of times of viewing received channels according to a time zone;
Fig. 5 depicts an example of displaying a result of counting the number of times of viewing received channels according to a time zone on a television monitor;
Figs. 6A and 6B depict specific examples of a result of counting the number of times of viewing received channels according to a time zone;
Figs. 7A and 7B depict specific examples of a result of counting the number of times of viewing received channels according to a date; and
Fig. 8 is a flowchart, which depicts one example of steps of procedures for causing the television receiver to operate.

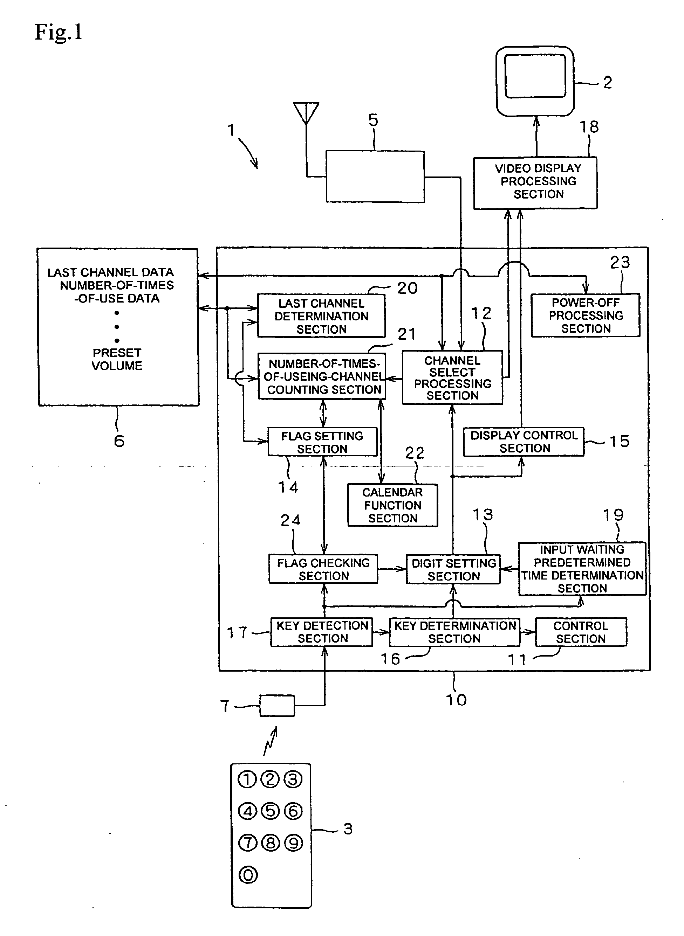

One embodiment of the present invention will be described hereinafter with reference to Figs. 1 to 8. Fig. 1 is a block diagram of a television receiver 1 according to one embodiment of the present invention, and depicts a schematic configuration of the television receiver 1. The television receiver 1 includes an operation remote controller 3, a tuner 5, a control microcomputer 10, an external memory 6, a remote controller light receiving section 7, and a television monitor 2.

A user of this television receiver 1 operates the operation remote controller 3, whereby the user can operate the television receiver 1. The operation remote controller 3 includes various operation keys for operating the television receiver 1. Specifically, the operation remote controller 3 includes a power key, an operation menu display key, and channel number keys as well as various keys necessary to operate the television receiver 1.

The power key is used to turn on or off a power of the television receiver 1. The operation menu display key is used so that an operation menu for setting conditions for actuating the television receiver 1 can be displayed on the television monitor 2 by operating the operation menu display key.

By inputting items to the operation menu displayed on the television monitor 2, the conditions for actuating the television receiver 1 can be set. To input the items to the operation menu, required operation keys on the operation remote controller 3 are operated.

In addition, an input waiting predetermined time T1 required until input waiting for waiting to input a channel for a predetermined time ends after one channel number key is operated in preparation for selection of a plural-digit channel is input and set through this operation menu.

The channel number keys are used to select a broadcast channel, which the television receiver 1 is to receive. As the channel number keys, keys that represent various numbers shown in Fig. 1 are provided on the operation remote controller 3.

Each of the operation keys on the operation remote controller 3 is operated by user's depressing the key, i.e., user's pressing down a surface of the key in a direction of a body of the operation remote controller 3.

When the user of the television receiver 1 operates one operation key on the operation remote controller 3, an operation key discrimination signal allocated to the operation key is output from the operation remote controller 3 and input to the remote controller light receiving section 7. The operation key discrimination signal input to the remote controller light receiving section 7 is input to a key detection section 17 to be described later.

An antenna is connected to the tuner 5. The tuner 5 selects and receives a broadcast wave on a broadcast channel to be received. The broadcast channel to be received (a specific frequency allocated to the broadcast channel) is set to the tuner 5 by a channel select processing section 12 to be described later. When the tuner 5 receives the broadcast channel thus set, a broadcast signals (a video signal and a voice signal) of this broadcast channel are output from the tuner 5 to the channel select processing section 12.

The control microcomputer 10 controls entirety of the television receiver 1. The control microcomputer 10 includes a central processing unit (CPU), a read only memory (ROM), and a random access memory (RAM).

The external memory 6 is connected to the control microcomputer 10. The external memory 6 is constituted to be readable and programmable by the control microcomputer 10. This external memory 6 can be composed by an E2PROM.

The control microcomputer 10 includes a control section 11, the channel select processing section 12, the key detection section 17, a key determination section 16, a flag setting section 14, a flag checking section 24, a digit setting section 13, an input waiting predetermined time determination section 19, a last channel determination section 20, a number-of-times-of-using-channel counting section 21, a calendar function section 22, a power-OFF processing section 23, and a display control section 15.

These constituent elements of the control microcomputer 10 are modularized by a program that is capable of arithmetic processing in the ROM.

The control section 11 controls an operation of the control microcomputer 10. By causing the control section 11 to control the respective constituent elements of the control microcomputer 10, the control microcomputer 10 controls an operation of the television receiver 1. It is noted that a control program composed by procedures for controlling the television receiver 1 is stored in the ROM of the control microcomputer 10. The control microcomputer 10 executes this control program, thereby controlling the television receiver 1.

The channel select processing section 12 sets (the specific frequency of) the broadcast channel to be received by the tuner 5. Data on the to-be-received broadcast channel and data on the frequency of the channel are input to the channel select processing section 12. The data on the to-be-received broadcast channel is input to the channel select processing section 12 by the digit setting section 13 to be described later.

The data on the frequency of the to-be-received broadcast channel is input to the channel select processing section 12 by the external memory 6. The external memory 6 stores data on frequencies of broadcast channels which the television receiver 1 can receive. It is noted that the external memory 6 stores data on the broadcast channels which the television receiver 1 can receive and data on receiving frequencies of the broadcast channels in advance by presetting broadcast channels.

When the to-be-received broadcast channel is set to the tuner 5 and the tuner 5 receives a broadcast signal (both of or one of a video signal and a voice signal) of this broadcast channel, the broadcast signal received by the tuner 5 is input from the tuner 5 to the channel select processing section 12.

The video signal input to the channel select processing section 12 is input to a video display processing section 18, to be described later, under control of the control section 11. The voice signal input to the channel select processing section 12 is input to a loudspeaker of the television monitor 2 through a signal processing path, not shown, under control of the control section 11.

The operation key discrimination signal output from the remote controller light receiving section 7 is input to the key detection section 17. The operation key discrimination signal input to the key detection section 17 is input to the key determination section 16, the input waiting predetermined time determination section 19, and the flag checking section 24.

The key determination section 16 determines a type of the operated key based on the input operation key discrimination signal. The key determination section 16 then outputs a key determination signal which determines the type of the operated key to the control section 11. If the operated operation key is a channel number key, then the key determination section 16 outputs numeric data that constitute a channel number to the digit setting section 13.

The control section 11 determines the type of the operated key based on the key determination signal input from the key determination section 16. The control section 11 then determines a content of an operation performed on the operation remote controller 3, and controls the operation of the television receiver 1 based on the content.

The input waiting predetermined time determination section 19 determines whether the input waiting predetermined time T1, which is a certain time for which the user waits to operate a channel number key in preparation for selecting a plural-digit channel, has passed.

Namely, the television receiver 1 is constituted so that when another channel number key is operated within the input waiting predetermined time T1 after the one channel number key is operated, a plural-digit channel is selected. Then, whether this input waiting predetermined time T1 has passed is determined by the input waiting predetermined time determination section 19.

When a channel number key is operated, a key discrimination signal corresponding to the operated channel number key is input to the input waiting predetermined time determination section 19 from the key detection section 17. Using data on time at which this key discrimination signal is input, the input waiting predetermined time determination section 19 determines whether the predetermined time T1 has passed.

When the input waiting predetermined time determination section 19 determines that the predetermined time T1 has passed, the input waiting predetermined time determination section 19 outputs an input waiting end signal to the digit setting section 13 to be described later. The digit setting section 13 determines whether channel selection is finished for the operation of the channel number key based on the input waiting end signal.

The control microcomputer 10 includes timer means, not shown, for counting time. The input waiting predetermined time determination section 19 appropriately refers to data on the time counted by the timer means.

The digit setting section 13 sets a channel number of the to-be-received broadcast channel to the channel select processing section 12. Numeric values in respective digits that constitutes the channel number output from the key determination section 16 are input to the digit setting section 13 sequentially, every time one channel number key is operated.

In addition, the input waiting end signal is input from the input waiting predetermined time determination section 19 to the digit setting section 13. In addition, a flag determination signal is input from the flag checking section 24, to be described later, to the digit setting section 13.

The flag determination signal indicating that a flag is set ON is input to the digit setting section 13 if at least either one of a flag of data on a last channel stored in a last channel memory or a flag of data on a channel that is used most frequently is set ON. Based on the input flag determination signal, the digit setting section 13 determines that the flag of at least either one of the data on the last channel or the data on the channel that is used most frequently is set ON.

While the flag determination signal indicating that the flag is set ON is input from the flag checking section 24 to the digit setting section 13, when a channel having a one-digit number is input according to an operation of first one of channel number keys, then the digit setting section 13 confirms that the one-digit channel is received before the input waiting end time signal is input to the digit setting section 13 from the input waiting predetermined time determination section 19, and outputs the one-digit channel thus confirmed to the channel select processing section 12.

When it is confirmed that the one-digit channel is received, the digit setting section 13 outputs a reception confirmation signal to the display control section 15 to be described later.

When a signal according to another operation of a channel number key is input to the digit setting section 13 before the input waiting end signal is input thereto while the flag determination signal indicating that the flag is set ON is input to the digit setting section 13, then the digit setting section 13 constitutes a plural-digit number using the channel number for which it is once confirmed that the channel corresponding to the channel number key is received and the another number input after the channel number once confirmed, and outputs again the plural-digit channel number to the channel select processing section 12. When the input waiting end signal is input to the digit setting section 13, the digit setting section 13 outputs again a reception confirmation signal to the display control section 15.

The flag setting section 14 forms a first flag according to the data on the channel that is used most frequently, and a second flag according to the last channel data.

Specifically, the flag setting section 14 forms the first flag signal for turning on the flag corresponding to the data on the channel that is used most frequently when the number-of-times-of-using-channel counting section 21, to be described later, determines that the channel used most frequently is a one-digit channel.

In addition, the flag setting section 14 forms the second flag signal for turning on the flag corresponding to the last channel data when the last channel determination section 20, to be described later, determines that the last channel is a one-digit channel.

When forming the first flag signal and the second flag signal, the flag setting section 14 outputs the first flag signal and the second flag signal to the flag checking section 24. When the first or the second flag signal is input from the flag setting section 14 to the flag checking section 24, the flag checking section 24 outputs a flag determination signal indicating that the flag of the data on the received channel is set ON to the digit setting section 13.

The last channel determination section 20 determines a channel number of a last channel, that is, a channel which the television receiver 1 receives when the television receiver 1 is finally turned off. The last channel determination section 20 then determines whether the last channel is a one-digit channel based on the channel number of the last channel.

The number-of-times-of-using-channel counting section 21 performs a processing for sequentially counting and integrating the number of times of using the channel received by the television receiver 1 for each channel. The number-of-times-of-using-channel counting section 21 counts the number of times of using the channel every time the received channel is switched, changed and it is confirmed that the channel is received.

The number-of-times-of-using-channel counting section 21 determines the channel having the largest number of times of use based on the counts of the channel, and determines whether the channel having the largest number of times of use is a one-digit channel. Data on the number of times of using the channel counted by the number-of-times-of-using-channel counting section 21 is stored in the external memory 6 while making the data correspond to the channel.

The power-OFF processing section 23 performs a processing for storing the channel number of the last channel received just before the television receiver 1 is turned off when the television receiver 1 is turned off. The channel number stored by the processing of the power-OFF processing section 23 is stored in the external memory 6 as last channel data.

The calendar function section 22 performs a processing for allocating a function as a calendar. Namely, the calendar function section 22 performs a processing for generating data on a month and a day and data on each time zone of the day.

The calendar function section 22 inputs date data composed by a month and a day and data on each time zone of the day to the number-of-times-of-using-channel counting section 21 if necessary.

The number-of-times-of-using-channel counting section 21 can thereby count the number of times of receiving each channel according to the date or each time zone when counting the number of times of using each channel.

It is noted that the calendar function section 22 is designed to be able to appropriately refer to data on time counted by the timer means included in the control microcomputer 10, and generates the data on the month and the day and the data on each time zone of the day based on this time data.

The display control section 15 exercises a control to determine whether to display the broadcast content of the channel selected by the operation of the channel number key on the television monitor 2. Specifically, when the reception confirmation signal is input to the display control section 15 from the digit setting section 13, the display control section 15 controls the video display processing section 18, to be described later, to output the broadcast channel which is confirmed to be received by the digit setting section 13 to the television monitor 2.

The video display processing section 18 performs processing for outputting the input video signal to the television monitor 2 as a video. The video display processing section 18 includes a color signal processing circuit that includes a chroma IC, and a deflection circuit. To display the video on the television monitor 2, the video display processing section 18 performs processing such as a horizontal scan, a vertical scan, a luminance control, and a color control based on the input video signal.

The video signal is input to the video display processing section 18 from the channel select processing section 12. The video signal input to the video display processing section 18 is processed by the video display processing section 18, and output to the television monitor 2. Whether the video display processing section 18 processes the video signal and outputs the video signal to the television monitor 2 is controlled by the display control section 15.

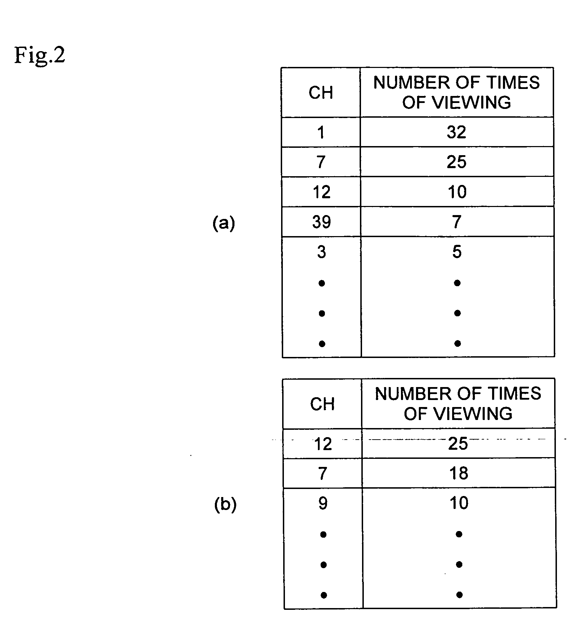

An example of the data on the number of times of using each channel stored in the external memory 6 will be described with reference to Figs. 2A and 2B. Fig. 2A depicts one example of a dataset on the numbers of times of using respective channels. Fig. 2B depicts another example of the dataset on the numbers of times of using the respective channels.

In the dataset shown in Figs. 2A and 2B, each received channel and the number of times of viewing the channel (the number of times of using the channel) are recorded while making them correspond to each other. In the example of the dataset shown in Fig. 2A, it is recorded that the number of times of viewing a channel 1 (1CH) is 32, and that the number of times of viewing a channel 7 is 25.

Further, the numbers of times of viewing of the other channels such as a channel 12, a channel 39, and a channel 3 are recorded in the dataset shown in Fig. 2A. It is noted that all the numbers of times of using channels other than those shown in Fig. 2A are also recorded in the dataset shown in Fig. 2A.

In the example of the dataset shown in Fig. 2B, it is recorded that the number of times of viewing a channel 12 is 25, and that the number of times of viewing a channel 7 is 18.

Further, the numbers of viewing of the other channels, such as a channel 9, are recorded in the dataset shown in Fig. 2B. It is noted that all the numbers of times of using channels other than those shown in Fig. 2B are also recorded in the dataset shown in Fig. 2B.

In the example shown in Fig. 2A, the channel having the largest number of times of viewing is the channel 1, and the channel 1 is a one-digit channel number in the recording of the numbers of times of using the channels shown in Fig. 2A. Therefore, the first flag according to the number of times of using each channel (hereinafter, "UCM") is set ON.

On the other hand, in the example shown in Fig. 2B, the channel having the largest number of times of viewing is the channel 12, and the channel 12 is a two-digit channel number. Therefore, the first flag (UCM) is set OFF.

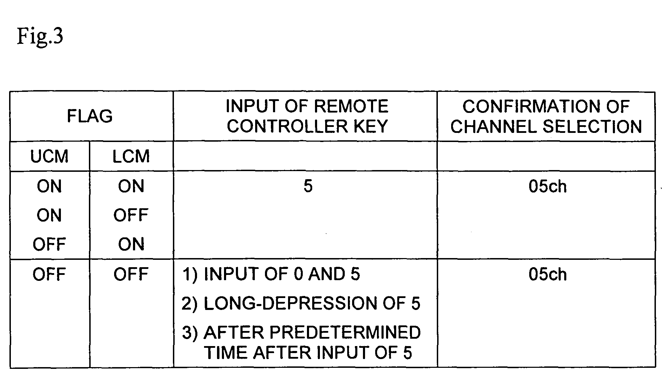

Next, conditions for confirming reception of a channel according to the flag set according to data on the received channel and the operation of the corresponding channel number key will be described with reference to Fig. 3.

Fig. 3 depicts correspondence among a flag for data on the received channel, an operated channel number key (remote controller input), and a channel which is confirmed the reception (channel select confirmation).

Referring to Fig. 3, symbol LCM denotes the second flag set for the data on the last channel received just before the television receiver 1 is finally turned off. Fig. 3 shows an example of operating a channel number key 5.

If the first flag (UCM) shown in Fig. 3 is set ON (ON), the control microcomputer 10 determines that a first condition to the effect that the channel having the largest number of times of receiving the channel is a one-digit channel number is satisfied.

Further, if the second flag (LCM) shown in Fig. 3 is set ON, the control microcomputer 10 determines that a second condition to the effect that the last channel is a one-digit channel number is satisfied.

If one of the flags UCM and LCM is set ON, of if both of UCM and LCM are set ON and the channel number key of, for example, 5 is operated, it is promptly confirmed that the channel 5 is received. When it is confirmed that the channel 5 is received, a broadcast content on the channel 5 is output to the television monitor 2.

On the other hand, if both the flags UCM and LCM are set OFF, it is not promptly confirmed that the channel 5, for example, is received only by operating the channel number key 5. In this case, as a method for confirming that a channel is received in response to an operation of a channel number key, three methods indicated in Fig. 3 can be used.

In a first channel confirmation method (1), it is confirmed that the channel 5 is received by operating channel number keys 0 and 5.

In a second channel confirmation method (2), it is confirmed that the channel 5 is received by depressing the channel number key 5 long for a predetermined time (e.g., continuously depressing the channel number key 5 for one second or more).

In a third channel confirmation method (3), it is confirmed that the channel 5 is received if none of the number keys are operated and a predetermined time (e.g., one second or more) passes after the channel number key 5 is operated.

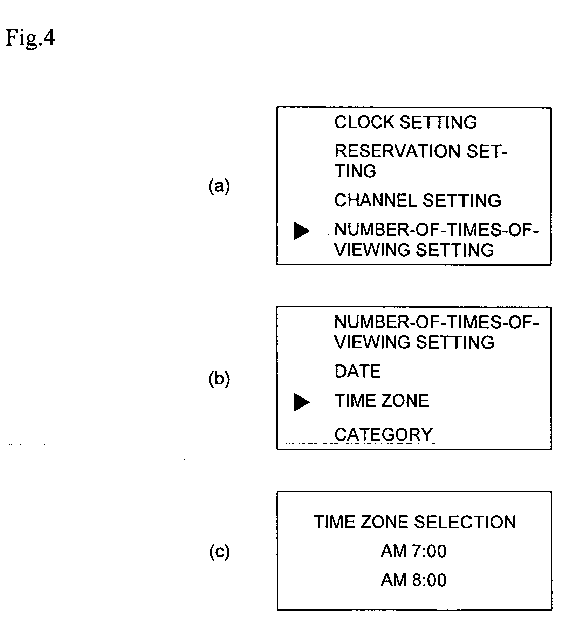

Referring next to Figs. 4A to 6B, an example of counting the number of times of viewing a channel according to data on a time zone in which the channel is received and date data composed by a month and a day will be described.

Figs. 4A to 4C depict examples of an operation menu displayed on the television monitor 2 for counting the number of times of viewing a channel according to the time zone data and the date data. Fig 4A shows an example in which "CLOCK SETTING", "RESERVATION SETTING", "CHANNEL SETTING", and ''NUMBER-OF-TIMES-OF-VIEWING SETTING" are displayed as operation menu items on the television monitor 2.

The item ''NUMBER-OF-TIMES-OF-VIEWING SETTING" is selected from among the operation menu items shown in Fig. 4A. As a result, a menu for setting conditions for counting the number of times of viewing a channel according to the time zone data and the date data is displayed as shown in Fig. 4B.

As shown in Fig. 4B, the item "TIME ZONE" is selected from items displayed on the television monitor 2. By inputting data based on an operation menu which is not shown in Figs. 4A to 4C, a specific time zone in which the number of times of viewing the channel is to be counted is set according to the time zone of the received channel.

As a result, the selected time zone is displayed on the television monitor 2 as shown in Fig. 4C. Fig. 4C shows an example in which a time zone from, for example, seven o'clock to eight o'clock in the morning is set as the time zone for counting the number of times of viewing the channel according to the time zone of the received channel.

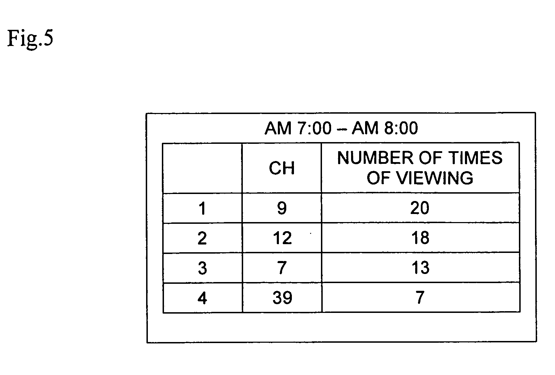

Fig. 5 depicts an example of displaying a result of counting the number of times of viewing the received channel according to the time zone on the television monitor 2. Fig. 5 shows the result of counting the number of times of viewing the channel received in a time zone from, for example, seven o'clock to eight o'clock in the morning.

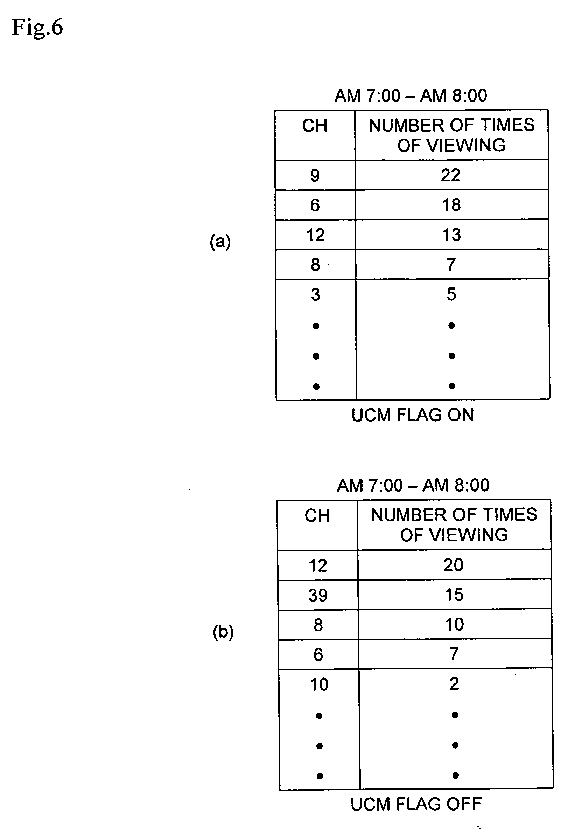

Specific examples of the result of counting the number of times of viewing each received channel according to the time zone data and the date data will next be described with reference to Figs. 6A to 7B.

Figs. 6A and 6B depict specific examples of results of counting the number of times of viewing each received channel according to the time zone. Counting results shown in Figs. 6A and 6B are examples of a dataset which can be stored in the external memory 6.

Fig. 6A depicts one specific example, and Fig. 6B depicts another specific example different from the one shown in Fig. 6A. As shown in Figs. 6A and 6B, each channel and the number of times of viewing the channel are recorded while making them correspond to each other.

Each of Figs. 6A and 6B depicts an example of counting the numbers of times of viewing respective channels received in a time zone, for example, from seven o'clock to eight o'clock in the morning. In the example shown in Fig. 6A, the channel having the largest number of times of viewing in the time zone from seven o'clock to eight o'clock in the morning is the channel 9. In the example shown in Fig. 6A, the flag UCM is set ON.

On the other hand, in the example shown in Fig. 6B, the channel having the largest number of times of viewing in the time zone from seven o'clock to eight o'clock in the morning is the channel 12. In the example shown in Fig. 6B, the flag UCM is set OFF.

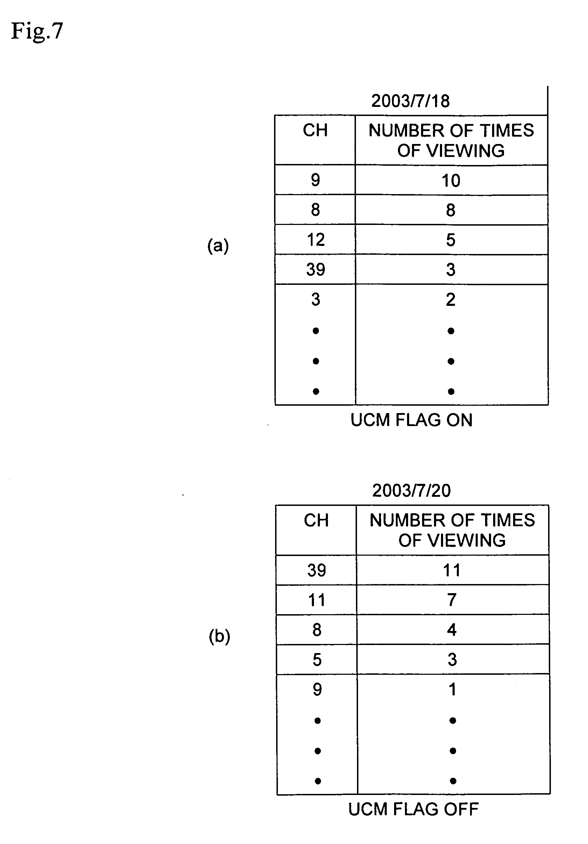

Figs. 7A and 7B depict specific examples of results of counting the number of times of viewing each received channel according to a date. Counting results shown in Figs. 7A and 7B are examples of a dataset which can be stored in the external memory 6.

Fig. 7A shows one specific example, and Fig. 7B shows another specific example different from the one shown in Fig. 7A. As shown in Figs. 7A and 7B, each channel and the number of times of viewing the channel are recorded while making them correspond to each other.

Fig. 7A shows an example of counting the numbers of times of viewing channels received on, for example, July 18, 2003. Fig. 7B shows an example of counting the numbers of times of viewing channels received on, for example, July 20, 2003.

In the example shown in Fig. 7A, the channel having the largest number of times of viewing on July 18, 2003 is the channel 9. In the example shown in Fig. 7A, the flag UCM is set ON.

On the other hand, in the example shown in Fig. 7B, the channel having the largest number of times of viewing on July 20, 2003 is a channel 39. In the example shown in Fig. 7B, the flag UCM is set OFF.

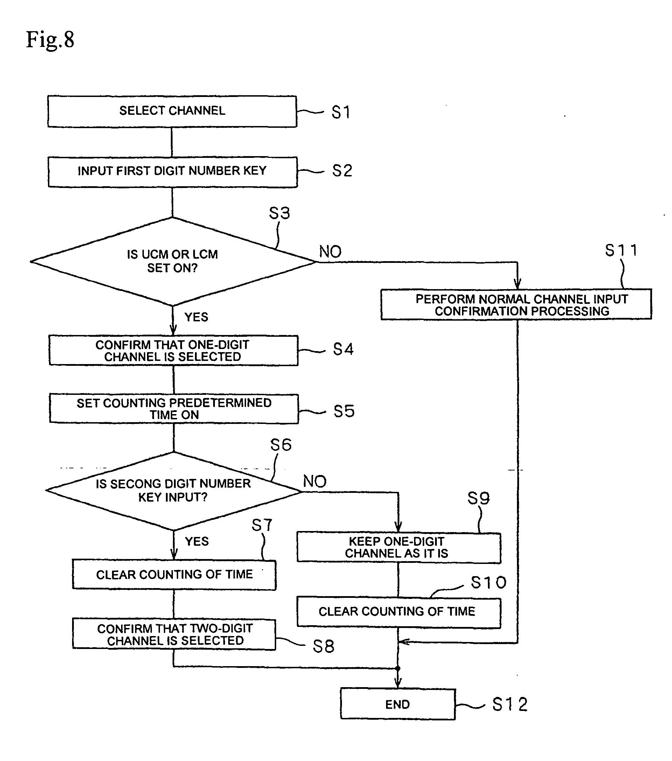

An example of causing the television receiver 1 described above to operate will next be described with reference to Fig. 8. Fig. 8 is a flowchart which shows one example of steps of procedures for causing the television receiver 1 to operate. The television receiver 1 is turned on, and a channel number key on the operation remote controller 3 is operated to select one channel (at a step S1). As a result, a broadcast content on one channel is received and output to the television monitor 2.

Next, a channel number key other than the channel number key corresponding to the selected one channel is operated, and a number key for a first digit is input (at a step S2). It is determined whether either UCM or LCM is set ON (at a step S3).

If one of the UCM and LCM is set ON ("Yes" at the step S3), then it is confirmed that a one-digit channel corresponding to the input number key by operating one channel number key at the step S2 is received, and channel selection is promptly performed (at a step S4). As a result, the broadcast content on the selected one-digit channel is output to the television monitor 2.

If it is confirmed that the one-digit channel is received, counting of the input waiting predetermined time T1 is started (set ON) (at a step S5). It is then determined whether a number key representing a numeric value in the second digit of the channel is input (at a step S6).

If it is determined that the numeric value in the second digit of the channel is input ("Yes" at the step S6), the time counting of the input waiting predetermined time T1 is cleared (at a step S7). It is then confirmed that the channel composed by two-digit numeric value is received, and this channel is selected (at a step S8). Thus, the processing is finished (at a step S12).

On the other hand, the numeric value in the second digit of the channel is not input ("No" at the step S6), the one-digit channel reception of which is confirmed at the step S4 is kept as it is received (at a step S9). The time counting of the input waiting predetermined time T 1 is then cleared (at a step S10), and the processing is finished (at the step S 12).

Further, if it is determined at the step S3 that neither UCM nor LCM are set ON ("NO" at the step S3), a normal channel input confirmation processing other than the processing based on the above-stated procedures for promptly confirming that the channel is input in response to the operation of one channel number key is performed (at a step S11), and the processing is finished (at the step S12).

As the normal channel input confirmation processing at the step S11, a processing based on any one of the first to the third channel confirmation methods (1) to (3) described with reference to Fig. 3 can be performed.

## Claims

1. A television receiver which comprises a plurality of channel number keys, a control microcomputer, and a television monitor, which receives a broadcast on a channel by an operation, by a user who uses the television receiver, of one of the channel number keys corresponding to the channel, and which outputs a content of the received broadcast to the television monitor, wherein
by sequentially storing a plurality of channels broadcasts of which are received, the channel having a largest number of times of receiving and the last channel received just before the television receiver is turned off are stored,
a first condition is set such that the channel having the largest number of times of receiving is a one-digit channel, a second condition is set such that said last channel is a one-digit channel, and it is determined whether the first condition is satisfied and whether the second condition is satisfied, and
if the user operates one of one-digit channel number keys, and in the case that it is determined that one of or both of said first condition and said second condition are satisfied, it is confirmed that the one-digit channel corresponding to said operated one-digit channel number key is received, and the content of the broadcast on the confirmed channel is output to the television monitor.

2. The television receiver according to claim 1, wherein
when said channels, the broadcasts on which are received, are stored, data on time zones in which the contents of the broadcasts on the respective channels are received are also stored, and the channel having the largest number of receiving is stored according to each of the time zones, and
if the user operates one of one-digit channel number keys, it is determined whether said first condition is satisfied for a time zone in which the user operates the one of one-digit channel number keys.

3. The television receiver according to claim 1, wherein
when said channels, the broadcasts on which are received, are stored, data on receiving dates each composed by a month and a day at which the broadcast on each of the channels is received is also stored, and the channel having the largest number of receiving is stored according to each of the receiving dates, and
if the user operates one of one-digit channel number keys, it is determined whether said first condition is satisfied for a date at which the user operates the one of one-digit channel number keys.
